# EUROPEAN PATENT SPECIFICATION

(11) **EP 2 167 353 B1**
(45) Date of publication and mention of the grant of the patent: **14.08.2013**
(21) Application number: 08754394.8
(22) Date of filing: 09.05.2008
(51) Int. Cl.: B60R 21/34

(54) **PEDESTRIAN PROTECTION AIRBAG SYSTEM**
FUSSGÄNGERSCHUTZ-AIRBAGSYSTEM
SYSTÈME DE COUSSIN GONFLABLE DE PROTECTION DE PIÉTON

(30) Priority: 19.07.2007 DE 102007033796
(43) Date of publication of application: 31.03.2010
(73) Proprietor: Key Safety Systems, Inc., Sterling Heights, MI 48313 (US)
(72) Inventor: HOFMANN, Volker, 60389 Frankfurt (DE); VOLMANN, Matthias, 61476 Kronberg (DE)
(74) Representative: Valentini, Giuliano
(86) International application number: PCT/US2008/006087
(87) International publication number: WO 2009/011731

(56) References cited:
- EP-A1- 1 607 283
- DE-A1- 10 345 387
- DE-U1- 20 320 873
- JP-A- 2004 322 724
- JP-A- 2005 343 201
- KR-B1- 100 613 778
- US-B2- 6 668 962
- US-B2- 7 143 856

## Description

A vehicle having a pedestrian protection airbag system has an airbag integrated in a front region of the vehicle.

A vehicle with a pedestrian protection airbag system is disclosed in DE 103 45 387 A1. The pedestrian protection airbag system has an airbag integrated at the rear end of a vehicle's hood. The airbag can only be deployed after a hood lifter has been actuated. The hood lifter without other assitance completely lifts the hood. The pedestrian protection airbag system completely covers the windshield with the exception of a few observation slits for the driver. An airbag of this type has the disadvantages that it limits the vision of the driver when deployed and actuation of a hood lifter is required.

JP 2004-322724 discloses a pedestrian protection airbag system wherein the rear end of a vehicle's hood is lifted by an airbag after a blocking mechanism in the form of a lock pin has been pulled out of a locking hole of an articulated arm by the airbag. This device is undesirable because the lock pin can become jammed in the locking hole such that both movement mechanisms, namely the lifting of the hood by the airbag and the removal of the lock pin from the locking hole, block each other.

The present invention provides a vehicle with a pedestrian protection airbag system having an airbag integrated in the a region of the vehicle. In a dormant state, the airbag is provided beneath a region of hood closest to a windshield. In a deployed state the airbag covers at least part of the windshield. At least one mechanical device functions as both a hinge allowing the hood to be raised at the front of the vehicle during normal operation of the vehicle and a release allowing a region of the hood closest to the windshield to be raised, which can be actuated by the deploying airbag to enable lifting of the region of the hood facing the windshield.

A vehicle with the new pedestrian protection airbag system has the advantage that a region of the hood is raised by the deploying airbag without having to actuate lifting devices or locking devices that may pose a potential risk of failure. A simple and reliable mechanical device that functions as both a hinge allowing the hood to be raised at the front of the vehicle during normal operation of the vehicle and a release allowing a region of the hood closest to the windshield to be raised ensures that a region of the hood facing the windshield is lifted as a pressure point of this opening is overcome. The airbag upon deployment applies considerable force that is used to overcome a threshold of the mechanical device that allows the mechanical device to switch from a hinge mode to a release mode. The deployed airbag covers at least the lower cross-member of the windshield. The lifted hood and the covering of a gap between the lower cross-member of the windshield and the rear edge of the hood by the airbag ensure that an impact of a human body is cushioned.
FIG. 1 is a schematic perspective view of a vehicle having a pedestrian protection airbag system according to the invention.
FIG. 2 is a schematic bottom view of a region facing a windshield beneath a hood fixed to an airbag.
FIG. 3 is a schematic bottom view of a hood fixed to an airbag.
FIG. 4 is a schematic cross-section of pedestrian protection airbag system of a further embodiment of the invention.
FIG. 5 is a schematic cross-section of a pedestrian protection airbag system according to FIG. 4.
FIG. 6 is a schematic cross-section of a pedestrian protection airbag system that is a variant of the embodiment of FIG. 4.
FIG. 7 is a schematic perspective view of a front region of a vehicle having a deploying airbag.
FIG. 8 is a schematic partial view of FIG. 7 with the airbag deployed.
FIG. 9 is a schematic partial view of a pedestrian protection airbag system.

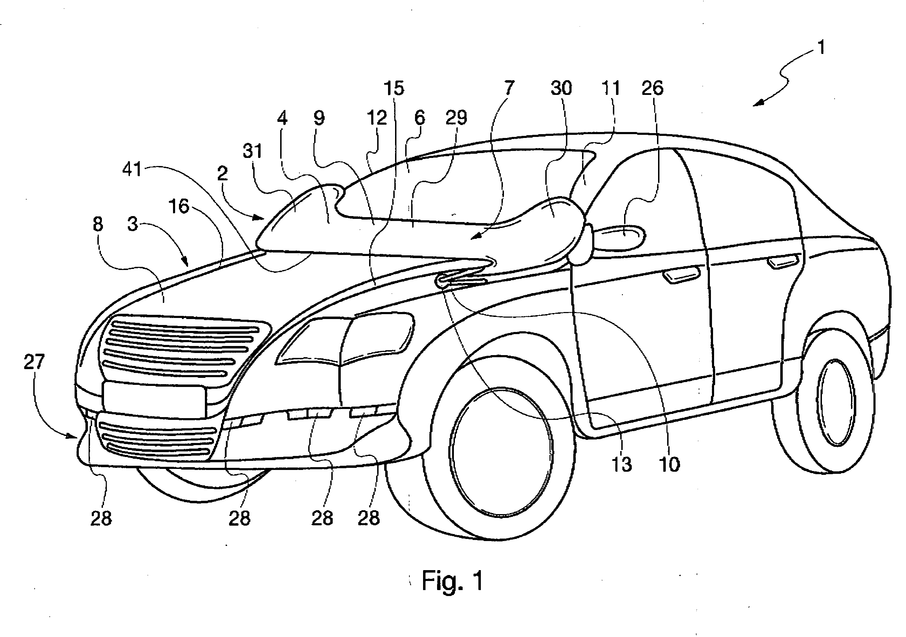

FIG. 1 is a schematic perspective view of a vehicle 1 equipped with a pedestrian protection airbag system 2 according to one embodiment of the invention. In FIG. 1 an airbag 4 in the front region 3 of the vehicle 1 is fully deployed. In this deployed state the the center region 29 of the airbag 4 covers a lower region 7 of the windshield 6. In a deployed state the airbag 4 further comprises lateral regions 30, 31 that partially cover at least the the base regions of the A-pillars 11, 12 disposed laterally of the windshield and partially extend over an outside rear-view mirror 26.

In the dormant state the airbag 4 is fixed to a lower side of a region of a hood 8 close to the windshield 6, where in the deployed state of the airbag 4 when a pedestrian impact or imminent impact is sensed a rear region of the hood 8 is raised by the expanding airbag 4. To this end, the vehicle in the region 7 of the hood 8 closest to the windshield 6 is provided with a mechanical device 10 that functions as both a hinge allowing the hood to be raised at the front of the vehicle during normal operation of the vehicle and a release allowing a region of the hood closest to the windshield to be raised, which comprises hinged joints 13, 14 on either side 15, 16 of the hood 8. These hinged joints ensure the capacity of lifting the hood at the front of the vehicle after releasing a preliminary locking device, without causing the mechanical device that functions as both a hinge allowing the hood to be raised at the front of the vehicle during normal operation of the vehicle and a release allowing a region of the hood closest to the windshield to be raised to switch from the hinge mode to the release mode. The pedestrian protection airbag system 2 has the capacity to bring about the lifting of the hood 8, which is shown in FIG. 1, after overcoming a threshold for changing the operational modes of the mechanical device 10 that functions as both a hinge allowing the hood to be raised at the front of the vehicle during normal operation of the vehicle and a release allowing a region of the hood closest to the windshield to be raised by the airbag 4.

The activation of the airbag in a timely manner is achieved when the vehicle is provided in a front bumper region 27 of the vehicle 1 with a proximity sensor system 28, which interacts with the corresponding trigger control of the airbag. The proximity sensor system may comprise a plurality of proximity sensors in the form of transmitting and receiving components, for example an ultrasound sensor system.of this type are known from the prior art so that only an adjustment of the proximity sensor system to the hazardous situation is required. Proximity sensor systems of this type may also be provided in headlights or other signal transmitters in the front region of the vehicle. Finally, it is also possible to detect the pedestrian impact caused by the impacting human body and at the latest then trigger the protection method for a pedestrian impact with the moving vehicle.

As the region 7 of the hood 8 closest to the windshield 6 is lifted by the airbag 4 a gap 40 is created between the lower cross-member and the rear edge of the hood, the gap being limited in the width by the two hinged joints 13, 14. After lowering the region of the hood closest to the windshield, the mechanical device that functions as both a hinge allowing the hood to be raised at the front of the vehicle during normal operation of the vehicle and a release allowing a region of the hood closest to the windshield to be raised returns to a hinge mode so the hood remains fully functional.

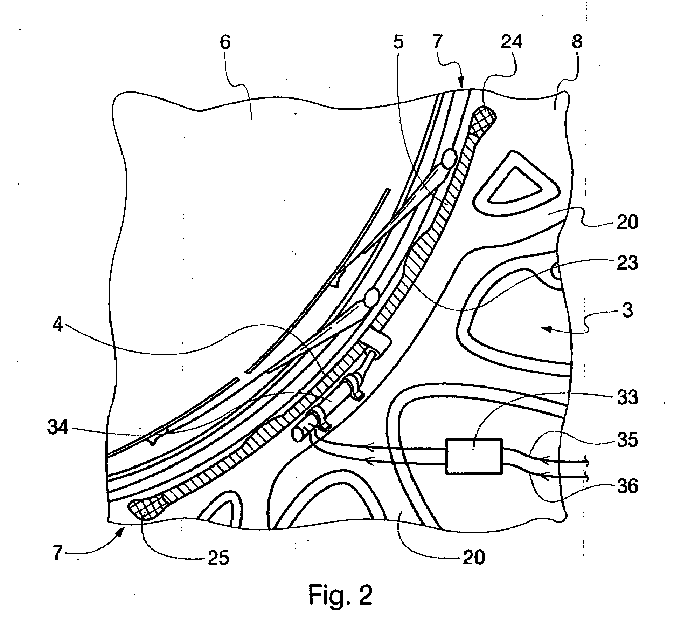

FIG. 2 is a schematic bottom view of a region 7 facing a windshield 6 beneath a hood 8 comprising an airbag 4 in a dormant state. The airbag 4 is disposed directly on the bottom 20 of the hood 8 in the region 7 facing the windshield 6. The airbag is accomodated in a space-saving manner by folding the airbag in a pleated configuration, wherein the pleated configuration provides a pleated region 23 for covering at least a portion of the windshield and a further pleated region 24, 25 having optionally a different pleated configuration for covering at least a region of at least one A-pillar and/or at least one outside rear-view mirror. The pleated regions 24, 25 at the end regions of the airbag only inflate and deploy when the pleated region 23 of the center region has already lifted the hood 8. The airbag 4 and an inflator 34 are fixed onto the bottom 20 of the hood 8 and connected to the hood via appropriate fastening means. The inflator 34 is triggered by a trigger control 33 and supplies gas to the airbag 4 to inflate and deploy the airbag. The trigger control 33 is electrically connected to the proximity sensor system shown in FIG. 1 via cables 35, 36. Upon triggering of the inflator 34 first the center pleated region 23 of the airbag for covering the windshield is inflated and subsequently, through an appropriate pleated configuration, the lateral pleated regions 24, 25 are inflated to cover at least one of the A-pillars and an outside rear-view mirror.

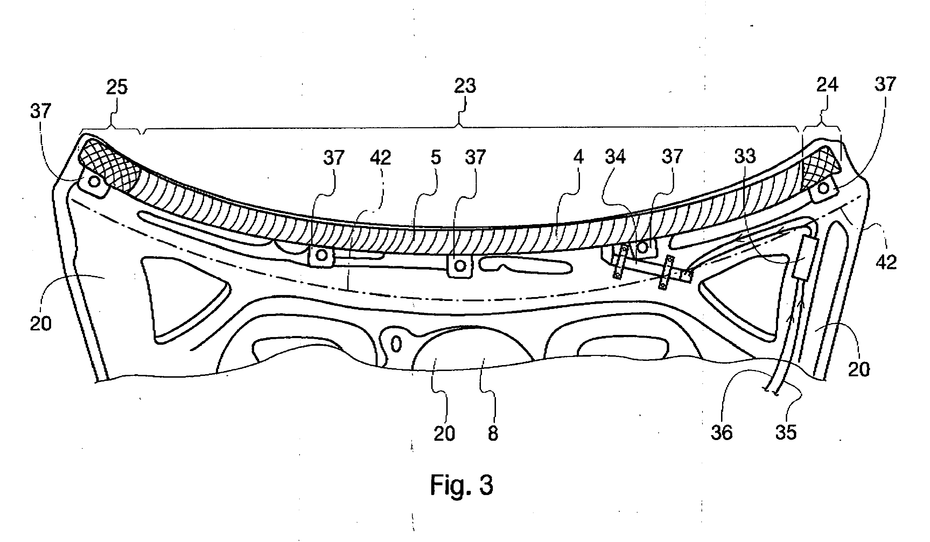

FIG. 3 is a schematic bottom view of a hood 8 having an airbag 4 fixed to a lower surface of the hood 8 with the help of fastening tabs 37. The interior of the airbag is in communication with an inflator 34. The inflator 34 is activated by the trigger control 33, so that the pleated region 23 of the airbag 4 can first deploy in the center in relation to the windshield and then the pleated regions 24, 25 at the ends of the airbag 4 inflate in order to cover lateral regions of the vehicle during a pedestrian impact situation. A dash-dotted line 42 marks the boundary of a sound-absorbing mat, which is not shown and which, above the line 42, protects an assembly comprising the airbag 4 and the inflator 34 and can lift off from the bottom 20 upon activation of the airbag. Beneath the line, the sound-absorbing mat is fixed to the bottom 20 or to the bottom side panel 38 and no lifting of the sound-absorbing mat is provided for.

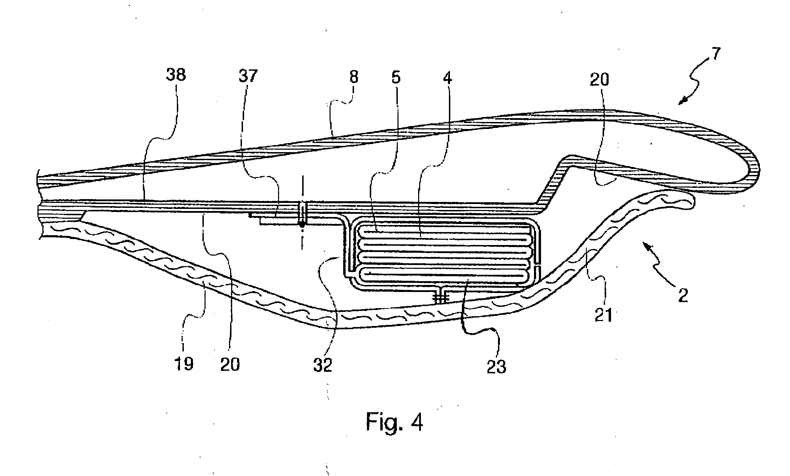

FIG. 4 is a schematic cross-section of a pedestrian protection airbag system 2 comprising an airbag 4 of a further embodiment of the invention. The airbag 4 is fixed to a region 7 of the hood 8 closest to the windshield to the bottom or to the bottom panel 38 of the hood 8 with the help of the fastening tabs 37. The airbag 4 is disposed in a folded configuration between a sound-absorbing mat 19 provided beneath the hood 8 and a bottom 20 of the hood. Vehicle hoods are commonly associated with such sound-absorbing mats. This arrangement has the advantage that the sound-absorbing mat protects the airbag from mechanical damage and exposure to chemicals. When the airbag is deployed the sound-absorbing mat can form a resilient, protective barrier against damage by vehicle components having sharp edges inside the engine compartment and between the engine compartment and the windshield. The sound-absorbing mat thus makes additional protective covers for the airbag redundant.

The protective action is improved by providing the sound-absorbing mat with an extension tab 21, which is at least partially rolled or arched and which encloses at least a region of the folded airbag and also acts a shield or protection for the deploying airbag in relation to vehicle parts in the front region of the vehicle. When deployment of the airbag begins the rolled or arched extension tab can unfold across the vehicle parts in the engine compartment and between the engine compartment and windshield such that for example the windshield wiper mechanism having sharp edges is covered. The extension tab 21 prevents the airbag from being damaged during deployment by vehicle parts in the engine compartment having sharp edges and ensures a soft pad when the airbag deploys.

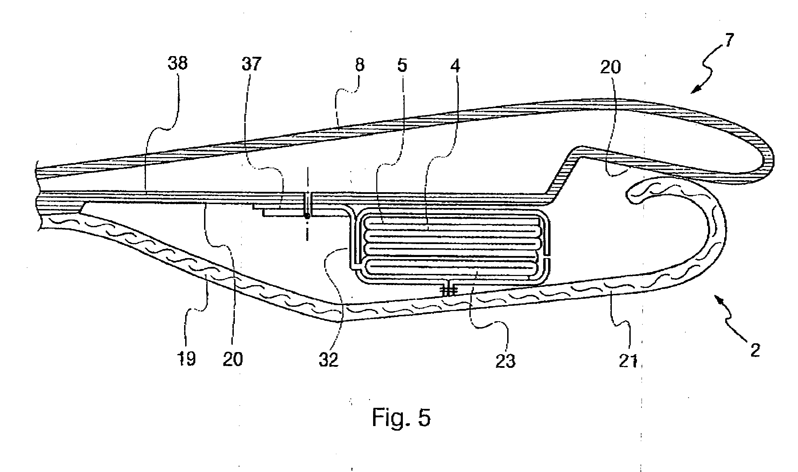

FIG. 5 is a schematic cross-section of a pedestrian protection airbag that is a variant of the embodiment according to FIG. 4. Components having identical functions as in FIG. 4 are marked with the same reference numerals and will not be explained again. In this embodiment shown in FIG. 5, the extension tab 21 is enlarged by rolling such that it forms a protection element for the windshield wiper mechanism at the same time, across which the airbag 4 will extend in the activation process.

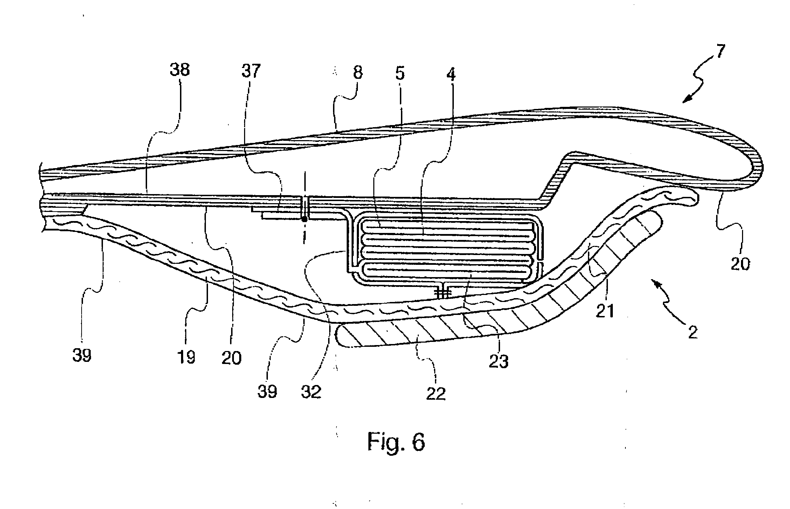

FIG. 6 is a schematic cross-section of a pedestrian protection airbag system 2 comprising an airbag 4 of a further variant of the embodiment according to FIG. 4. In this embodiment, a hard shell 22 is provided on the bottom of the sound-absorbing mat 19 in the region of the extension tab 21, the shell being connected through a material bond to the bottom 39 of the sound-absorbing mat 19. If the airbag is deployed it presses the hard shell and the sound-absorbing mat against sharp-edged vehicle parts. The hard shell forms an abutment for the airbag, which can thus safely and at a reduced pressure, which is to say more quickly, overcome the threshold for changing the operational modes of the mechanical device that functions as both a hinge allowing the hood to be raised at the front of the vehicle during normal operation of the vehicle and a release allowing a region of the hood closest to the windshield to be raised. The inflation of the center pleated region 23 if the airbag provides sufficient force to overcome the threshold for changing the operational modes of the mechanical device that functions as both a hinge allowing the hood to be raised at the front of the vehicle during normal operation of the vehicle and a release allowing a region of the hood closest to the windshield to be raised and guarantee the creation of a gap between the windshield and the rear edge of the hood.

Instead of a hard shell, it is possible to adapt the vehicle parts in the engine compartment to the pedestrian protection requirements such that at least one vehicle part, which could cause problems in the region beneath a region of the hood facing the windshield, such as a fluid reservoir, is configured in a reinforced manner such that this vehicle part is not substantially deformed with impaired function by the deploying airbag. The reinforced vehicle part acts as an abutment for the development of a sufficiently high threshold force for changing the operational modes of the mechanical device that functions as both a hinge allowing the hood to be raised at the front of the vehicle during normal operation of the vehicle and a release allowing a region of the hood closest to the windshield to be raised.

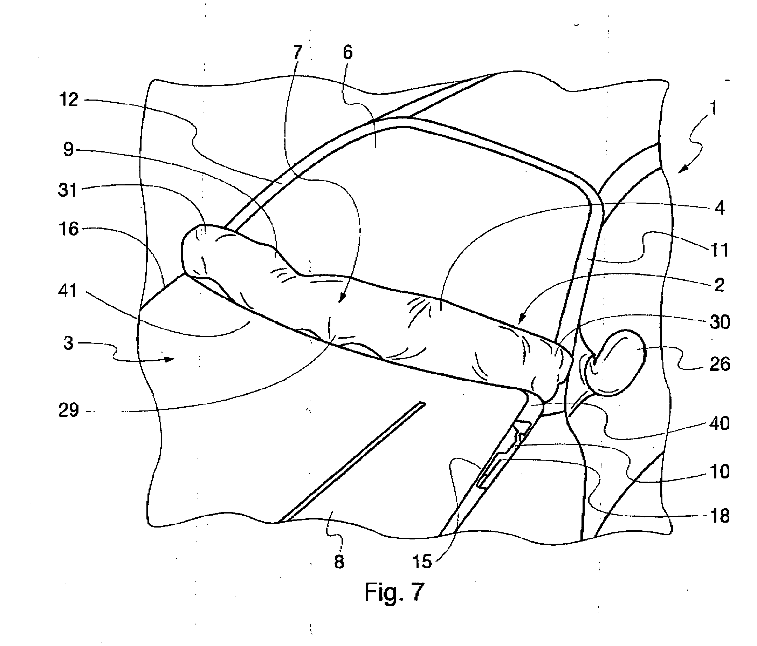

FIG. 7 is a schematic perspective view of a front region 3 of a vehicle 1 showing a deploying airbag 4. The pedestrian protection airbag system 2 includes a mechanical device 10 that functions as both a hinge allowing the hood to be raised at the front of the vehicle during normal operation of the vehicle and a release allowing a region of the hood closest to the windshield to be raised. In this embodiment the mechanical device 10 comprises a deformable articulated arm 18 that is deformed when a threshold pressure point is overcome allowing a region of the hood closest to the windshield to be raised by the airbag 4 and a gap 40 is created at the rear edge 41 of the hood 8, thus allowing the airbag to extend through the gap.

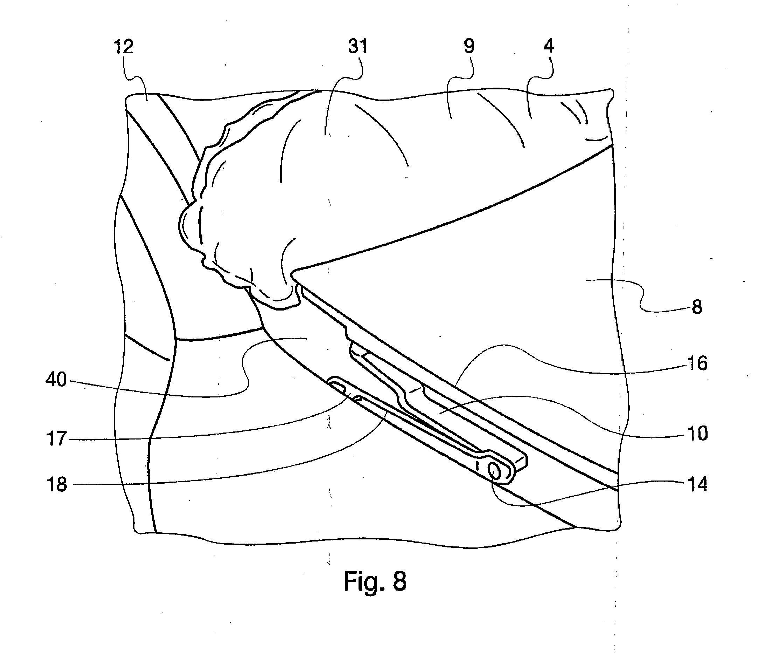

FIG. 8 is a schematic partial view of FIG. 7 after the airbag 4 has fully deployed. A hinged joint 13, 14 may comprise at least one detent joint 17, comprising a detent the hinged joint that mates with a complementary indentation. The detent joint 17 defines the threshold of the force required for the mechanical device that functions as both a hinge allowing the hood to be raised at the front of the vehicle during normal operation of the vehicle and a release allowing a region of the hood closest to the windshield to be raised to transition from a hinge mode to a release mode. This threshold may optionally be adjustable. After the threshold pressure point of the detent joint 17 has been overcome, the hinged joint facilitates the raising of the section of the hood closest to the windshield and delimits a gap 40 through which the airbag can deploy in the direction of the windshield. Instead of a detent hinge or in addition to the detent hinge, a hinged joint13, 14 may comprise a deformable articulated arm 18. The deformable articulated arm 18enables a limited raising of the section of the hood closest to the windshield and both facilitates and limits the gap 40 for deploying the inflating airbag. The mechanical device 10 that functions as both a hinge allowing the hood to be raised at the front of the vehicle during normal operation of the vehicle and a release allowing a region of the hood closest to the windshield to be raised comprises a detent hinge 17, which interacts with a deformable articulated arm 18.

In a further preferred embodiment, instead of or in addition to the detent hinge or the deformable articulated arm, at least one resilient articulated arm may be provided. A resilient articulated arm preferably comprises a rubber elastic articulated arm or a spring elastic articulated arm. Both embodiments ensure that through the pressure of the deploying airbag the resilient articulated arms enable the creation of a gap through which the airbag can deploy towards the windshield.

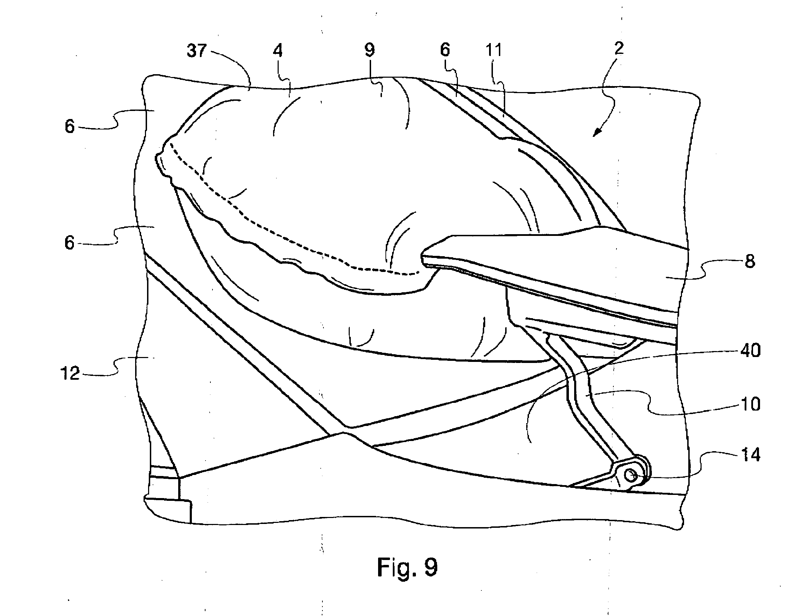

FIG. 9 is a schematic partial view of a pedestrian protection airbag system 2 having a fully deployed airbag 4 and a mechanical device that functions as both a hinge allowing the hood to be raised at the front of the vehicle during normal operation of the vehicle and a release allowing a region of the hood closest to the windshield to be raised, which a movable hinged joint 14, which after overcoming a threshold force for changing the operational modes of the mechanical device 10 switches to a release mode allowing a region of the hood closest to the windshield to be raised creating a gap 40 for deployment of the airbag 4. At the same time, the mechanical device 10 delimits the gap 40. The hood remains connected to the vehicle in an articulated manner.

A method for providing protection during a pedestrian impact with a front portion of moving vehicle comprises the following steps. First, a pedestrian impact is detected in the front region of the moving vehicle. Then an inflating process is triggered for a folded airbag fixed under the vehicle's hood. During deployment of the airbag an extension tab of a sound-absorbing mat is pressed against vehicle parts by the inflating airbag. As a result of force exerted by the inflating airbag the threshold for changing the operational modes of the mechanical device that functions as both a hinge allowing the hood to be raised at the front of the vehicle during normal operation of the vehicle and a release allowing a region of the hood closest to the windshield to be raised is passed and the mechanical device transitions from the hinge mode to the release mode. Thereupon, at least a center region of the airbag deploys to offer pedestrian impact protection in the region of the windshield. In addition deployment of at least one lateral region of the airbag can occur to offer pedestrian impact protection in the region of at least one A-pillar and/or at least one rear-view mirror.

This method has the advantage that the airbag is deploymed without having to previously actuate or unlock a hood lifting device or a locking device. The mechanical device that functions as both a hinge allowing the hood to be raised at the front of the vehicle during normal operation of the vehicle and a release allowing a region of the hood closest to the windshield to be raised is automatically transitioned from the hinge mode to the release mode by the inflating airbag without risking blockage of a hood locking device and without risking a delay by the hood lifting device.

## Claims

1. A vehicle comprising pedestrian protection airbag system (2), the vehicle having a hood (8) that is normally lifted at the front of the vehicle, wherein the pedestrian protection airbag system (2) includes an airbag (4) that is disposed in a folded configuration beneath the hood (8) in a region of the hood closest to a windshield (6) of the vehicle, **characterized in that** the airbag (4) is disposed between a sound-absorbing mat (19) provided beneath the hood (8) and a bottom (20) of the hood (8) in a region of the hood closest to a windshield (6) of the vehicle, and **in that** the vehicle is provided with a mechanical device (10) that functions as both a hinge allowing the hood to be raised at the front of the vehicle during normal operation of the vehicle and a release allowing a region of the hood closest to the windshield to be raised, the mechanical device (10) comprising two hinged joints (13, 14) with the airbag located between them, the sound-absorbing mat (19) is provided with one at least partially rolled or arched extension tab (21), which encloses at least a region of the folded airbag (4) and provides a shield or protection for the deploying airbag (4) in relation to vehicle parts in the front region (3) of the vehicle, wherein a hard shell (22) is provided on the sound-absorbing mat (19) in the region of the extension tab (21), the shell comprising a support or protection for other components of the vehicle, the deploying airbag (4) expanding and pushing against both the bottom of the hood and the shell to exceed the threshold force required to cause the mechanical device (10) to switch to a release mode and lift the region of the hood nearest the windshield, the airbag in a deployed state (9) covering at least a region of the windshield (6).

2. A vehicle according to claim 1, wherein the airbag in the deployed state (9) covers at least a region of at least one A-pillar (11, 12), which is disposed laterally of the windshield (6).

3. A vehicle according to either of claims 1 or 2, wherein at least one hinged joint (13, 14) comprises a detent joint (17) and pressure exerted by the expanding airbag overcomes the pressure point of the detent to allows the pressure exerted by the expanding airbag (4) to lift at least a region of the hood (8).

4. A vehicle according to either of claims 1 or 2, wherein at least one hinged joint (13, 14) comprises at least one deformable articulated arm (18) and pressure exerted by the expanding airbag causes the deformable articulated arm to give way and allows the pressure exerted by the expanding airbag (4) to lift at least a region of the hood (8).

5. A vehicle according to either of claims 1 or 2, wherein at least the hinged joint (13, 14) comprises at least one resilient articulated arm (18) and pressure exerted by the expanding airbag causes the resilient articulated arm to give way and allows the pressure exerted by the expanding airbag (4) to lift at least a region of the hood (8).

6. A vehicle according to either of claims 1 or 2, wherein at least the hinged joint (13, 14) comprises at least one rubber elastic articulated arm (18) and pressure exerted by the expanding airbag causes the rubber elastic articulated arm to elastically deform and allows the pressure exerted by the expanding airbag (4) to lift at least a region of the hood (8).

7. A vehicle according to either of claims 1 or 2, wherein at least the hinged joint (13, 14) comprises at least one spring elastic articulated arm (18) and pressure exerted by the expanding airbag causes the rubber elastic articulated arm to elastically deform and allows the pressure exerted by the expanding airbag (4) to lift at least a region of the hood (8).

8. A vehicle according to any one of the preceding claims, wherein at least one vehicle part in the region beneath a region (7) of the hood (8) facing the windshield (6), particularly the fluid reservoir, is configured in a reinforced manner such that this vehicle part is not substantially deformed by the deployed airbag (4).

9. A vehicle according to any one of the preceding claims, wherein the airbag (4) is folded in a pleated configuration, which comprises a pleated region (23) for covering at least a region of the windshield and at least one pleated region (24, 25) for covering at least a region of at least one A-pillar (11, 12) and/or at least one outside rear-view mirror (26).

10. A vehicle according to any one of the preceding claims, wherein the vehicle (1) in a front bumper region (27) is provided with a proximity sensor system (28), which interacts with a trigger control (33) of the airbag (4).

## Patentansprüche

1. Fahrzeug, das ein Fußgängerschutz-Airbagsystem (2) aufweist, wobei das Fahrzeug eine Motorhaube (8) aufweist, die normalerweise an der Vorderseite des Fahrzeuges angehoben wird, wobei das Fußgängerschutz-Airbagsystem (2) einen Airbag (4) umfasst, der in einer gefalteten Konfiguration unterhalb der Motorhaube (8) in einem Bereich der Motorhaube angeordnet wird, der der Windschutzscheibe (6) des Fahrzeuges am nächsten ist, **dadurch gekennzeichnet, dass** der Airbag (4) zwischen einer schallabsorbierenden Matte (19), die unterhalb der Motorhaube (8) vorhanden ist, und einem Boden (20) der Motorhaube (8) in einem Bereich der Motorhaube angeordnet wird, die einer Windschutzscheibe (6) des Fahrzeuges am nächsten ist, und dadurch, dass das Fahrzeug mit einer mechanischen Vorrichtung (10) versehen ist, die als sowohl ein Gelenk, das das Anheben der Motorhaube an der Vorderseite des Fahrzeuges während des normalen Betriebes des Fahrzeuges gestattet, als auch ein Auslöser funktioniert, der gestattet, dass ein Bereich der Motorhaube, der der Windschutzscheibe am nächsten ist, angehoben wird, wobei die mechanische Vorrichtung (10) zwei Gelenkverbindungen (13, 14) aufweist, zwischen denen der Airbag angeordnet ist, wobei die schallabsorbierende Matte (19) mit einem mindestens teilweise gerollten oder gewölbten Verlängerungsvorsprung (21) versehen ist, der mindestens einen Bereich des gefalteten Airbags (4) einschließt und eine Abschirmung oder einen Schutz für den sich entfaltenden Airbag (4) in Beziehung zu Fahrzeugteilen im vorderen Bereich (3) des Fahrzeuges bereitstellt, wobei eine harte Außenhülle (22) auf der schallabsorbierenden Matte (19) im Bereich des Verlängerungsvorsprunges (21) vorhanden ist, wobei die Außenhülle eine Auflage oder einen Schutz für andere Bauteile des Fahrzeuges aufweist, wobei sich der entfaltende Airbag (4) ausdehnt und gegen sowohl den Boden der Motorhaube als auch die Außenhülle drückt, um die Grenzkraft zu übersteigen, die erforderlich ist, damit veranlasst wird, dass die mechanische Vorrichtung (10) in eine Auslösebetriebsart schaltet und den Bereich der Motorhaube anhebt, der der Windschutzscheibe am nächsten ist, wobei der Airbag in einem entfalteten Zustand (9) mindestens einen Bereich der Windschutzscheibe (6) bedeckt.

2. Fahrzeug nach Anspruch 1, bei dem der Airbag im entfalteten Zustand (9) mindestens einen Bereich von mindestens einer A-Säule (11, 12) bedeckt, der seitlich von der Windschutzscheibe (6) angeordnet ist.

3. Fahrzeug nach entweder Anspruch 1 oder 2, bei dem mindestens eine Gelenkverbindung (13, 14) eine Einraststelle (17) aufweist und der Druck, der durch den sich ausdehnenden Airbag ausgeübt wird, den Druckpunkt des Einrastens überwindet und gestattet, dass der vom sich ausdehnenden Airbag (4) ausgeübte Druck mindestens einen Bereich der Motorhaube (8) anhebt.

4. Fahrzeug nach entweder Anspruch 1 oder 2, bei dem mindestens eine Gelenkverbindung (13, 14) mindestens einen verformbaren Gelenkarm (18) aufweist, und der vom sich ausdehnenden Airbag ausgeübte Druck bewirkt, dass der verformbare Gelenkarm Platz macht und gestattet, dass der vom sich ausdehnenden Airbag (4) ausgeübte Druck mindestens einen Bereich der Motorhaube (8) anhebt.

5. Fahrzeug nach entweder Anspruch 1 oder 2, bei dem mindestens die Gelenkverbindung (13, 14) mindestens einen elastischen Gelenkarm (18) aufweist und der Druck, der durch den sich ausdehnenden Airbag ausgeübt wird, bewirkt, dass der elastische Gelenkarm Platz macht und gestattet, dass der vom sich ausdehnenden Airbag (4) ausgeübte Druck mindestens einen Bereich der Motorhaube (8) anhebt.

6. Fahrzeug nach entweder Anspruch 1 oder 2, bei dem mindestens die Gelenkverbindung (13, 14) mindestens einen gummielastischen Gelenkarm (18) aufweist und der Druck, der durch den sich ausdehnenden Airbag ausgeübt wird, bewirkt, dass der gummielastische Gelenkarm sich elastisch verformt und gestattet, dass der vom sich ausdehnenden Airbag (4) ausgeübte Druck mindestens einen Bereich der Motorhaube (8) anhebt.

7. Fahrzeug nach entweder Anspruch 1 oder 2, bei dem mindestens die Gelenkverbindung (13, 14) mindestens einen federelastischen Gelenkarm (18) aufweist und der Druck, der durch den sich ausdehnenden Airbag ausgeübt wird, bewirkt, dass der gummielastische Gelenkarm sich elastisch verformt und gestattet, dass der vom sich ausdehnenden Airbag (4) ausgeübte Druck mindestens einen Bereich der Motorhaube (8) anhebt.

8. Fahrzeug nach einem der vorhergehenden Ansprüche, bei dem mindestens ein Fahrzeugteil im Bereich unterhalb eines Bereiches (7) der Motorhaube (8), das zur Windschutzscheibe (6) hin liegt, insbesondere der Flüssigkeitsbehälter, in einer verstärkten Weise ausgebildet ist, so dass dieses Fahrzeugteil im Wesentlichen nicht durch den sich entfaltenden Airbag (4) verformt wird.

9. Fahrzeug nach einem der vorhergehenden Ansprüche, bei dem der Airbag (4) in einer plissierten Konfiguration gefaltet ist, die einen plissierten Bereich (23) für das Bedecken von mindestens einem Bereich der Windschutzscheibe und mindestens einen plissierten Bereich (24, 25) für das Bedecken von mindestens einem Bereich der mindestens einen A-Säule (11, 12) und/oder mindestens einem äußeren Rückspiegel (26) aufweist.

10. Fahrzeug nach einem der vorhergehenden Ansprüche, bei dem das Fahrzeug (1) in einem vorderen Stoßstangenbereich (27) mit einem Näherungssensorsystem (28) versehen ist, das mit einer Auslösesteuerung (33) des Airbags (4) in Wechselwirkung ist.

## Revendications

1. Véhicule, comprenant un système de coussin d'air de protection des piétons (2), le véhicule comportant un capot (8) normalement soulevé au niveau de l'avant du véhicule, le système de coussin d'air de protection des piétons (2) englobant un coussin d'air (4) agencé dans une configuration pliée au-dessous du capot (8), dans une région du capot la plus proche d'un pare-brise (6) du véhicule, **caractérisé en ce que** le coussin d'air (4) est agencé entre un tapis à absorption du son (19) agencé au-dessous du capot (8) et une partie inférieure (20) du capot (8), dans la région du capot la plus proche du pare-brise (6) du véhicule, et **en ce que** le véhicule comporte un dispositif mécanique (10), servant d'articulation permettant le soulèvement du capot au niveau de l'avant du véhicule au cours du fonctionnement normal du véhicule, et de moyen de relâchement, permettant le soulèvement de la région du capot la plus proche du pare-brise, le dispositif mécanique (10) comprenant deux joints articulés (13, 14), le coussin d'air étant agencé entre eux, le tapis à absorption du son (19) comportant une patte d'extension au moins en partie enroulée ou arquée (21), renfermant au moins une région du coussin d'air plié (4) et établissant un écran ou une protection pour le coussin d'air en déploiement (4) par rapport aux parties du véhicule situées dans la région avant (3) du véhicule, une coque dure (22) étant agencée sur le tapis à absorption du son (19) dans la région de la patte d'extension (21), la coque comprenant un support ou une protection pour d'autre composants du véhicule, le coussin d'air en déploiement (4) se dilatant et exerçant une poussée contre la partie inférieure du capot et la coque, dépassant la force de seuil requise pour entraîner la commutation du dispositif mécanique (10) vers le mode de relâchement et soulever la région du capot la plus proche du pare-brise, le coussin d'air recouvrant dans un état déployé (9) au moins une région du pare-brise (6).

2. Véhicule selon la revendication 1, dans lequel le coussin d'air recouvre dans l'état déployé (9) au moins une région d'au moins un montant A (11, 12) agencée latéralement par rapport au pare-brise (6).

3. Véhicule selon les revendications 1 ou 2, dans lequel au moins un joint articulé (13, 14) comprend un joint à encliquetage (17), la pression exercée par le coussin d'air en déploiement surmontant le point de pression du cliquet pour permettre le soulèvement d'au moins une région du capot (8) par la pression exercée par le coussin d'air en déploiement (4).

4. Véhicule selon les revendications 1 ou 2, dans lequel au moins un joint articulé (13, 14) comprend au moins un bras articulé déformable (18), la pression exercée par le coussin d'air en déploiement permettant le dégagement du bras articulé déformable et permettant le soulèvement d'au moins une région du capot (8) par la pression exercée par le coussin d'air en déploiement (4).

5. Véhicule selon les revendications 1 ou 2, dans lequel au moins le joint articulé (13, 14) comprend au moins un bras articulé souple (18), la pression exercée par le coussin d'air en déploiement entraînant le dégagement du bras articulé souple et permettant le soulèvement d'au moins une région du capot (8) par la pression exercée par le coussin d'air en déploiement (4).

6. Véhicule selon les revendications 1 ou 2, dans lequel au moins le joint articulé (13, 14) comprend au moins un bras articulé élastique en caoutchouc (18), la pression exercée par le coussin d'air en déploiement entraînant la déformation élastique du bras articulé élastique en caoutchouc et permettant le soulèvement d'au moins une région du capot (8) par le coussin d'air en déploiement (4).

7. Véhicule selon les revendications 1 ou 2, dans lequel au moins le joint articulé (13, 14) comprend au moins un bras articulé élastique à ressort (18), la pression exercée par le coussin d'air en déploiement entraînant la déformation élastique du bras articulé élastique à ressort et permettant le soulèvement d'au moins une région du capot (8) par la pression exercée par la coussin d'air en déploiement (4).

8. Véhicule selon l'une quelconque des revendications précédentes, dans lequel au moins une partie du véhicule dans la région située au-dessous (7) du capot (8) faisant face au pare-brise (6), en particulier au réservoir de fluide, est configurée de manière renforcée, de sorte que cette partie du véhicule n'est pas déformée notablement par le coussin d'air en déploiement (4).

9. Véhicule selon l'une quelconque des revendications précédentes, dans lequel le coussin d'air (4) est plié dans une configuration plissée, comprenant une région plissée (23) pour recouvrir au moins une région du pare-brise et au moins une région plissée (24, 25), pour recouvrir au moins une région d'au moins un montant A (11, 12) et /ou au moins un rétroviseur extérieur (26).

10. Véhicule selon l'une quelconque des revendications précédentes, dans lequel le véhicule (1) comporte dans une région du pare-chocs avant (27) un système de capteur de proximité (28), coopérant avec une commande de déclenchement (33) du coussin d'air (4).
